# EUROPEAN PATENT SPECIFICATION

(11) **EP 1 358 957 B1**
(45) Date of publication and mention of the grant of the patent: **26.10.2005**
(21) Application number: 03252419.1
(22) Date of filing: 16.04.2003
(51) Int. Cl.: B22D 17/12, B22D 17/14, B22D 17/20, B22D 17/22

(54) **Molding device**
Giessvorrichtung
Dispositif de moulage

(30) Priority: 17.04.2002 JP 2002114284; 06.12.2002 JP 2002355594; 08.01.2003 JP 2003002462
(43) Date of publication of application: 05.11.2003
(73) Proprietor: Toshihara Kanagata Kogyo Co., Ltd., Inazawa-shi, Aichi-ken (JP)
(72) Inventor: Itoh, Akira, c/o Toshihara Kanagata Kogyo Co., Ltd, Inazawa-shi, Aichi-ken (JP)
(74) Representative: Ablett, Graham Keith

(56) References cited:
- EP-A- 0 790 090
- EP-A- 0 813 922
- WO-A-01/05537
- DE-A- 19 921 496
- PATENT ABSTRACTS OF JAPAN vol. 004, no. 033 (M-003), 21 March 1980 (1980-03-21) & JP 55 008382 A (KAWASAKI HEAVY IND LTD), 21 January 1980 (1980-01-21)
- PATENT ABSTRACTS OF JAPAN vol. 016, no. 119 (M-1225), 25 March 1992 (1992-03-25) -& JP 03 285749 A (UBE IND LTD), 16 December 1991 (1991-12-16)

## Description

### BACKGROUND OF THE INVENTION

The present invention is related to a molding device for molding various products in a cavity.

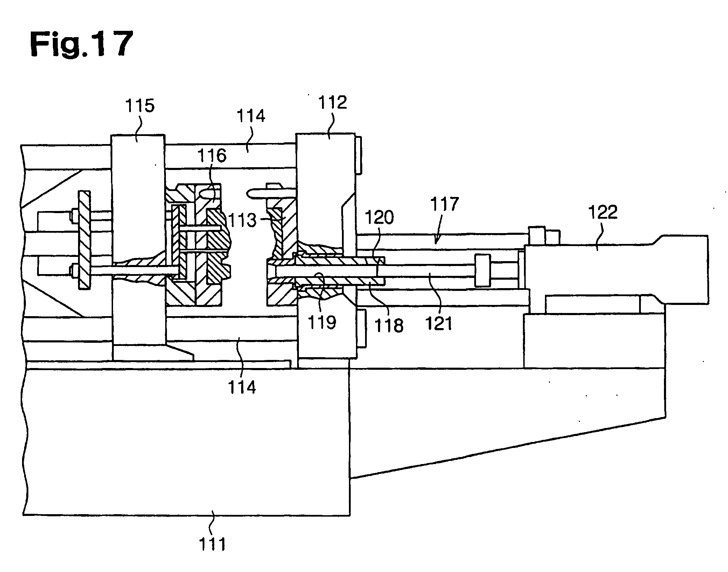

A conventional molding device as shown in Fig. 17 has been proposed. The molding device comprises a fixed mold 113 and a mold-holding member 115. The fixed mold 113 is detachably mounted to a mold-holding member 112 that is fixed to a bed 111. The mold-holding member 115 is mounted so as to reciprocate along guide rails 114 in the front and rear direction (left and right direction as viewed in Fig. 17) with respect to the mold-holding member 112. A movable mold 116 is detachably mounted to the mold-holding member 115. An injection mechanism 117 is arranged at the right side of the bed 111. Liquid metal such as aluminum is fed via the injection mechanism 117 into a cavity that is formed by the fixed mold 113 and the movable mold 116 that are closed to mold a product. The injection mechanism 117 comprises a sleeve 118. The sleeve 118 includes a storing chamber 119 for the molten metal that penetrates through the mold-holding member 112 to be communicated to the fixed mold 113. An injection opening 120 for the molten metal is formed at an outer edge of the sleeve 118. An injection rod 121 is inserted in the storing chamber 119 and is reciprocated by a cylinder 122.

In the above molding device, the molten metal is injected into the storing chamber 119 from the injection opening 120 while the movable mold 116 is in a closed state with respect to the fixed mold 113. Then, the injection rod 121 is moved forward by the cylinder 122 so that the molten metal in the storing chamber 119 is pressed into the cavity. Therefore, the number of process steps of the molding operation is three, including the mold closing, the injection of the molten metal, and the pressing of the molten metal. The efficiency of the molding operation is decreased and manufacturing cost is increased because of the number of process steps.

In the above molding device, the pressure in the cavity is decreased after closing the molds so that the air in the cavity is not mixed with the molten metal during the injection molding. However, if the pressure is decreased to a high negative pressure, outer air penetrates into the storing chamber 119 through a small opening between an outer circumferential surface and an inner circumferential surface of the sleeve 118. The outer air is led into the cavity and fine bubbles are mixed with the molten metal, and the quality of the molding is decreased. Therefore, it is difficult to increase the negative pressure and improve the quality of the moulding.

JP 55 008 382 discloses a die casting method and die casting apparatus comprising a moveable die and a fixed die that shape a cavity. A storing chamber is arranged in the fixed die and is in communication with the cavity. Before the shot, molten metal is charged into the sleeve. The molten metal is introduced into the cavity by a plunger.

WO 01/05537 discloses a vertical die casting press comprising upper and bottom die members, a plurality of injection sleeves provided on a first rotating table, and a shot plunger sliding in each injection sleeve. The injection sleeves can be moved in sequence between a molten-metal feeding station, and a molten-metal injection station where each injection sleeve is aligned with an upper die member. Each injection sleeve and an associated shot plunger are engageable with and disengageable from respective actuators by a rotation of the same table which supports the injection sleeves. When an injection sleeve is at the molten-metal injection station, the molten-metal can be injected into the cavity of the die mould provided by the upper and bottom die members.

An object of the present invention is to provide a moulding device that improves the efficiency of a moulding operation and the quality of the moulding.

To achieve the foregoing and other objectives of the present and in accordance with the purpose of the present invention, according to a first aspect of the present invention as described in independent claim 1, there is provided a molding device comprising: a lower mold unit; an upper mold unit arranged above the lower mold unit to face the lower mold unit, wherein the lower mold unit and the upper mold unit are moveable relative to one another so as to allow them to approach and be separated from each other, and wherein, when the lower mold unit and the upper mold unit approach each other to be closed, a molding cavity is defined between the lower mold unit and the upper mold unit; a storing chamber for storing molten material, the storing chamber arranged in the lower mold unit, wherein the storing chamber is communicable with the molding cavity; and a pushing mechanism arranged in the lower mold unit for pushing the molten material out of the storing chamber to the molding cavity when the molding cavity is defined between the lower mold unit and the upper mold unit, the molding device being characterized in that: the lower mold unit includes a movable member that defines a part of the molding cavity and the storing chamber, wherein the pushing mechanism includes a pushing rod that is insertable into the storing chamber, the pushing rod having an end surface that forms a bottom of the storing chamber, and wherein the pushing rod is for pushing the molten material out of the storing chamber to the molding cavity when the movable member moves together with the upper mold unit with respect: to the pushing rod.

Further features of the present invention are described in the dependent claims.

Other aspects and advantages of the invention will become apparent from the following description, taken in conjunction with the accompanying drawings, illustrating by way of example! the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross sectional view of a main portion of a molding device according to a first embodiment of the present invention;
Fig. 2 is a cross sectional view showing an open state of a mold unit that is arranged in the molding device of Fig. 1;
Fig. 3 is a cross sectional view of the first embodiment showing a lower mold-holding member of a lower mold unit when the lower mold-holding member is tilted;
Fig. 4 is a cross sectional view of the first embodiment showing a storing chamber when molten metal is stored in the storing chamber;
Fig. 5 is a cross sectional view of the first embodiment showing an upper mold-holding member of an upper mold unit arranged at an intermediate height position;
Fig. 6 is a cross sectional view of the first embodiment showing the lower mold unit and the upper mold unit when they are closed;
Fig. 7 is a cross sectional view of the whole molding device of the first embodiment;
Fig. 8 is a cross sectional view of a molding device according to a second embodiment of the present invention;
Fig. 9 is a cross sectional view of a molding device according to a modification of the second embodiment of the present invention;
Fig. 10 is a cross sectional view of a molding device according to another modification of the second embodiment of the present invention;
Fig. 11 is a cross sectional view of a molding device according to still another modification of the second embodiment of the present invention;
Fig. 12 is a cross sectional view showing a lower mold unit of the molding device of Fig. 11 that moves sideways;
Fig. 13 is a cross sectional view of a molding device according to a modification of the modified second embodiment of the present invention shown in Figs. 11 and 12;
Fig. 14 is a cross sectional view of a molding device according to a modification of the first embodiment of the present invention;
Fig. 15 is a cross sectional view showing that a condition of a mold unit of Fig. 14 is changed;
Fig. 16 is a cross sectional view of a molding device according to a modification of the embodiment of the present invention shown in Fig. 14; and
Fig. 17 is a cross sectional view of a prior art molding device.

### DETAILED DESCRIPTION OF THE PREFERRED EMBODIMENTS

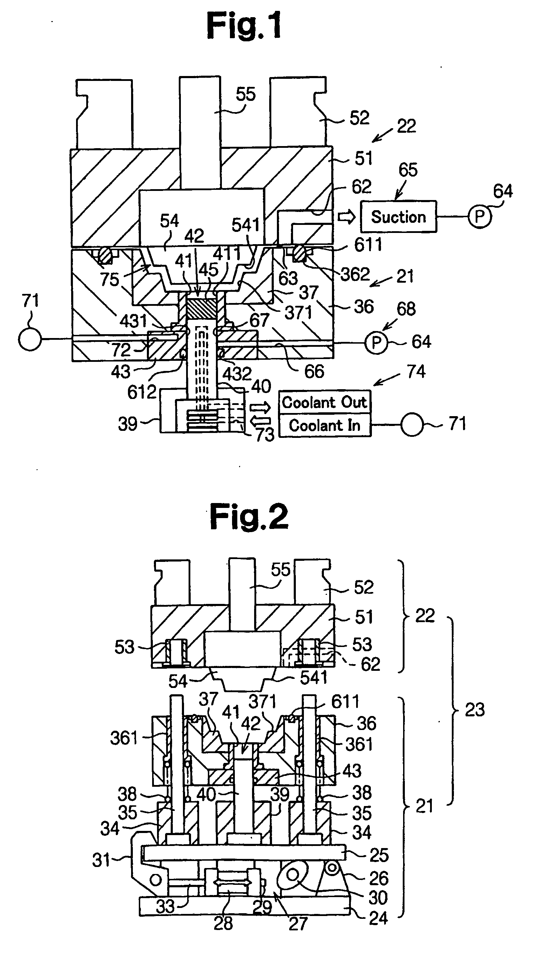

Hereinafter, a molding device according to one embodiment of the present invention will be explained with reference to Figs. 1-7.

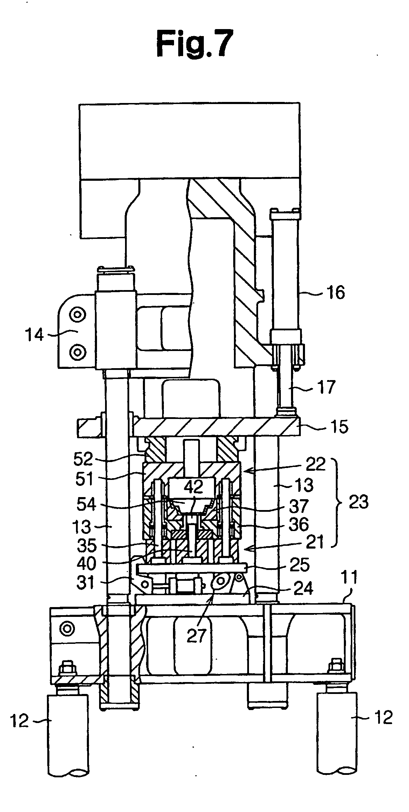

A structure of a whole molding device will be explained with reference to Fig. 7.

Legs 12 are arranged on a lower surface of a lower support stand 11 and guide supports 13 are arranged at a plurality of positions (four in this embodiment) on an upper surface of the lower support stand 11 so as to extend upward parallel to each other. An upper support stand 14 is arranged horizontally between the upper end portions of the guide supports 13. A lift plate 15 is arranged at an upper portion of each guide support 13 so as to reciprocate up and down. The lift plate 15 is lifted or lowered by piston rods 17 of a plurality of cylinders 16 (only one is shown) that are fixed downwardly to the upper support stand 14.

A lower mold unit 21 that serves as a first mold unit is arranged on an upper surface of the lower support stand 11 so as to be positioned between the guide supports 13. An upper mold unit 22 that serves as a second mold unit is arranged on a lower surface of the lift plate 15. A mold unit 23 comprises the lower mold unit 21 and the upper mold unit 22.

A structure of the lower mold unit 21 and the upper mold unit 22 of the mold unit 23 will be explained with reference to Figs. 1 and 2.

A base plate 24 of the lower mold unit 21 shown in Fig. 2 is mounted on an upper surface of the lower support stand 11 shown in Fig. 7 by a clamp mechanism (not shown). A horizontal support plate 25 is arranged on an upper surface of the base plate 24 via a hinge mechanism 26 so as to be tilted up and down. A tilt mechanism 27 is arranged between the base plate 24 and the horizontal support plate 25 so as to tilt the horizontal support plate 25. The tilt mechanism 27 comprises a tilt cylinder 28 and a cam 30. The tilt cylinder 28 is supported horizontally on the upper surface of the base plate 24. The cam 30 is operated by a piston rod 29 of the tilt cylinder 28. A lock lever 31 is supported at the left end of the base plate 24 so as to be tilted left and right direction. The lock lever 31 is maintained at a locked position by a piston rod 33 that is extended to the left end of the tilt cylinder 28.

A pair of seats 34 is fixed to the left and right sides of the upper surface of the horizontal support plate 25. Cylindrical guide rods 35 that serve as a guide mechanism are arranged in the seats 34 so as to extend upwardly and parallel to each other. A lower mold-holding member 36 of a metal material, such as iron, is fitted to the guide rod 35 via a cylindrical sleeve 361 so as to reciprocate up and down. A lower mold 37 is accommodated detachably in a center position of the upper surface of the lower mold-holding member 36. A coil spring 38 that serves as a lift maintaining mechanism is arranged between the upper surface of each seat 34 and the lower surface of the sleeve 361 in the lower mold-holding member 36 and always maintains the lower mold-holding member 36 elastically at a predetermined height. The lower mold-holding member 36 and the lower mold 37 form a movable member.

A seat 39 is fixed at a center of the upper surface of the horizontal support plate 25. An injection rod 40 that serves as a pushing rod, or a pushing mechanism, is extended from the seat 39 upwardly. A cylindrical member 41 is fitted and fixed in the center of the lower mold-holding member 36 and the lower mold 37. A guide member 43 is fitted in the center of the lower surface of the lower mold-holding member 36 and fixed to the lower mold-holding member 36 by a bolt (not shown). The upper end of the injection rod 40 is inserted to a penetration hole 431 that is formed in the guide member 43 and an inner circumferential surface 411 of the cylindrical member 41. A space of a cylindrical shape with a bottom that is formed by the inner circumferential surface 411 of the cylindrical member 41 and the upper end surface of the injection rod 40 is a storing chamber 42 for storing a material to be molded such as metal. The molten metal 45 is injected from the upper direction into the storing chamber 42.

An upper mold unit 22 that is mounted on the lift plate 15 will be explained. Connection members 52 are connected to a plurality of positions of the upper surface of an upper mold-holding member 51 of a metal material. The connection members 52 are fixed to the lower surface of the lift plate 15 shown in Fig. 7 via a clamp mechanism (not shown). A pair of cylindrical guide members 53 is arranged on two ends of the lower surface of the upper mold-holding member 51 corresponding to the guide rods 35 of the lower mold unit 21. When the upper mold unit 22 is lowered, the guide rods 35 are inserted to the corresponding cylindrical guide members 53 and the upper mold-holding member 51 is guided along the guide rods 35. An upper mold 54 is detachably arranged in the center of the lower surface of the upper mold-holding member 51. A support rod 55 is arranged in the upper mold-holding member 51 for maintaining the upper mold 54. A cavity 75 is formed by a second molding surface 541 that is formed in the upper mold 54 and a first molding surface 371 that is formed in the lower mold 37. A product of a predetermined shape is molded in the cavity 75.

A first pressure-decreasing mechanism 65 and a second pressure-decreasing mechanism 68 will be explained. The first pressure decreasing mechanism is arranged in the upper mold unit 22 and the second pressure-decreasing mechanism 68 is arranged in the lower mold unit 21.

A circular groove 362 is formed in the upper surface of the lower mold-holding member 36 so as to surround the lower mold 37. A first seal ring 611 that serves as a first seal member is accommodated in the circular groove 362 so as to be extended upwardly from the upper surface of the lower mold-holding member 36.

A first pressure-decreasing passage 62 is formed in a predetermined position of the upper mold-holding member 51. The first pressure-decreasing passage 62 is open at the lower surface of the upper mold-holding member 51. A start end of the opening of the first pressure-decreasing passage 62 is communicated to a first space 63 that is formed between the holding members 36 and 51 when the lower mold-holding member 36 and the upper mold-holding member 51 are close to each other as shown in Fig. 1 and the first seal ring 611 functions as a seal member. The basal end of the first pressure-decreasing passage 62 is connected to a pressure-decreasing pump 64. In this embodiment, the first pressure-decreasing mechanism 65 comprises the first seal ring 611, the first pressure-decreasing passage 62, the first space 63, the pressure-decreasing pump 64, and other components.

A circular groove 432 is formed in a penetration hole 431 of the guide member 43 and a second seal ring 612 of rubber that serves as a second seal member is accommodated in the circular groove 432. A second pressure-decreasing passage 66 is formed in the lower mold-holding member 36 and the guide member 43. A start end of the opening of the second pressure-decreasing passage 66 is open to a second space 67 that is formed between the outer circumferential surface of the injection rod 40 and the penetration hole 431 of the guide member 43. The position of the opening is set between the second seal ring 612 and the storing chamber 42. The second pressure-decreasing passage 66 is connected to the pressure-decreasing pump 64. In this embodiment, the second pressure-decreasing mechanism 68 comprises the second seal ring 612, the second pressure-decreasing passage 66, the second space 67, the pressure-decreasing pump 64, and other components.

A cooling mechanism 74 of the second seal ring 612 that is arranged in the guide member 43 will be explained.

Coolant that is supplied from a water source 71 such as tap water as shown in Fig. 1 is supplied to a first cooling passage 72 that is arranged in the lower mold-holding member 36 and the guide member 43. The first cooling passage 72 is arranged so as to surround the penetration hole 431 of the guide member 43 at a predetermined distance and indirectly cool down the second space 67. The water after cooling down is discharged outside via a discharge passage and a discharge pipe (not shown). A second cooling passage 73 is formed in the seat 39 and the injection rod 40. The inner portion of the injection rod 40 is cooled down by the coolant that is supplied from the water source 71 and this indirectly cools down the second seal ring 612. In this embodiment, the cooling mechanism 74 comprises the water source 71, the first cooling passage 72, the second cooling passage 73, and other components.

An operation of the above structured molding device will be explained. In Figs. 2-6, the structure of the first pressure-decreasing mechanism 65 and the second pressure-decreasing mechanism 68 other than the first pressure-decreasing passage 62 is omitted.

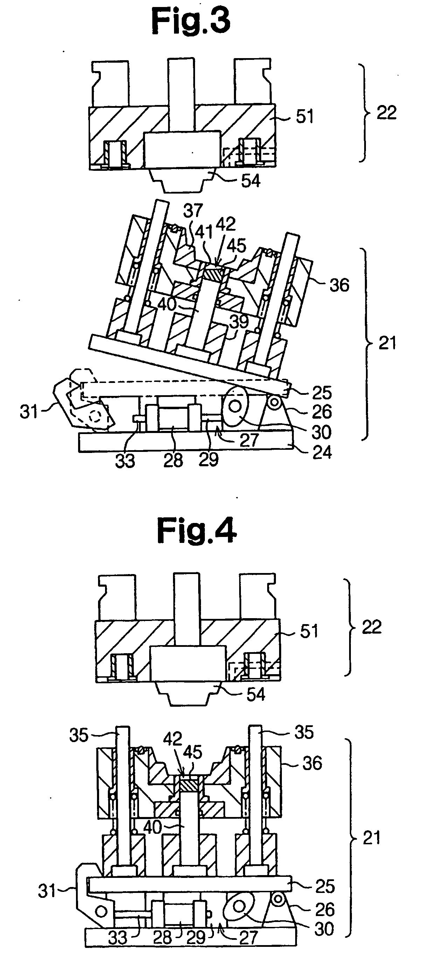

Fig. 2 shows an open state in which the upper mold unit 22 is separated upwardly from the lower mold unit 21. In this state, the piston rod 33 of the tilt cylinder 28 is moved rearward (in the right direction in Fig. 2) and the locked condition of the lock lever 31 is released manually. The piston rod 29 of the tilt cylinder 28 of the tilt mechanism 27 is move forward (in the right direction in Fig. 2) to rotate the cam 30. Then, the horizontal support plate 25 and the lower mold-holding member 36 are rotated in the clockwise direction around the hinge mechanism 26 as shown in Fig. 3. In this state, the molten metal 45 is supplied to the storing chamber 42.

Next, the piston rod 29 of the tilt mechanism 27 is moved rearward in Fig. 3, and the horizontal support plate 25 and the lower mold-holding member 36 return to the horizontal original position as shown in Fig. 4. Afterwards, the lock lever 31 is rotated by moving the piston rod 33 to the left so that the left end of the horizontal support plate is locked by the lock lever 31.

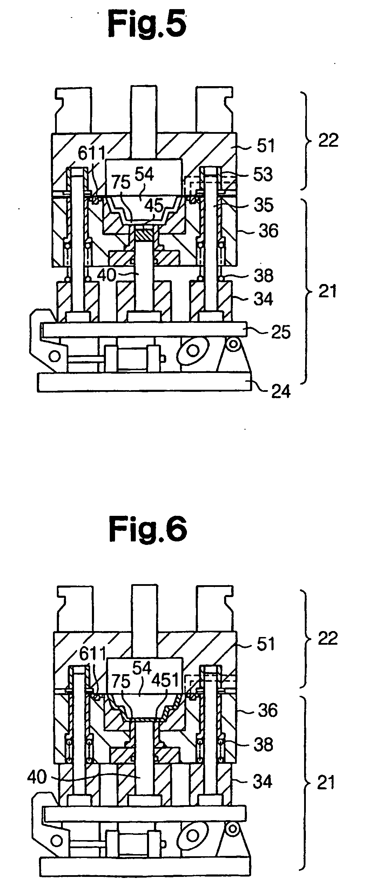

Next, the upper mold unit 22 is moved downwardly as shown in Fig. 5, and the upper mold-holding member 51 is stopped and maintained at the intermediate height position where the lower surface of the upper mold-holding member 51 approaches the upper surface of the lower mold-holding member 36. In this state, the first space 63 (refer to Fig. 1) is formed between the lower mold-holding member 36 and the upper mold-holding member 51 and the upper surface of the first seal ring 611 is pressed toward the lower surface of the upper mold-holding member 51 with an appropriate pressure. In the state shown in Fig. 1, the pressure-decreasing pump 64 is operated so that the air in the cavity 75 is discharged outside via the first pressure-decreasing passage 62 and the air in the second space 67 that is formed between the injection rod 40 and the guide member 43 is discharged outside via the second pressure-decreasing passage 66. The pressure in the second space 67 is maintained the same as that in the cavity 75.

The second space 67 is shut out from the cavity 75 by the molten metal 45 in the storing chamber 42. The pressure in the second space 67 acts on the lower surface of the molten metal 45, which is positioned on the opposite side of the cavity 75, while the pressure in the cavity 75 acts on the upper surface of the molten metal 45 in the storing chamber 42. Therefore, if the pressure in the second space 67 is higher than the pressure in the cavity 75, the molten metal 45 in the storing chamber 42 is lifted up toward the cavity 75 by the pressure in the second space 67. In other cases, the air in the second space 67 is mixed with the molten metal 45 in the storing chamber 42 as fine air bubbles. However, in this embodiment, since the pressure in the second space 67 is decreased to the same level as the pressure in the cavity 75, the molten metal 45 is prevented from moving in the storing chamber 42, and the air bubbles are prevented from being mixed with the molten metal 45.

As shown in Fig. 6, the upper mold unit 22 is moved downwardly and the lower mold-holding member 36 is moved downwardly by the upper mold-holding member 51. At this time, because the first seal ring 611 is pressed by the lower surface of the upper mold-holding member 51, the first seal ring 611 is compressed in the circular groove 362 (refer to Fig. 1), the upper surface of the lower mold-holding member 36 and the lower surface of the upper mold-holding member 51 are in close contact with each other, and the molding device is in a closed state. The lower mold-holding member 36 is pressed upwardly by the upper mold-holding member 51 against the upward urging force of the coil spring 38 and the lower end surface of the lower mold-holding member 36 is in contact with the upper end surface of the seat 34. In the lowering process of the lower mold-holding member 36, the injection rod 40 is relatively moved upwardly in the cylindrical member 41 and the molten metal 45 stored in the storing chamber 42 is pressed into the cavity 75. Accordingly, a product 451 of a shape of the cavity 75 is molded.

After the product 451 is manufactured, the upper mold unit 22 is moved upwardly. Therefore, the upper mold-holding member 51 and the upper mold 54 are separated from the product 451 and the molding device is maintained in the open state, as shown in Fig. 2. As is not shown, the product 451 is pressed upwardly from the first molding surface 371 by a product pushing out pin that is arranged in the lower mold-holding member 36.

According to the molding device of the above embodiment, following advantages are obtained.
(1) In the above embodiment, the storing chamber 42 of the molten metal 45 is formed in the lower mold-holding member 36 and the lower mold 37 of the lower mold unit 21. The molten metal 45 in the storing chamber 42 is pressed into the cavity 75 by the injection rod 40 in connection with the mold closing operation of the lower mold unit 21 and the upper mold unit 22. Therefore, the conventional injection mechanism that is mounted outside is not necessary, the structure is simplified, and the molding device is small in size. Also, the devices are manufactured easily and the cost is decreased. The molten metal 45 in the storing chamber 42 is pressed into the cavity 75 corresponding to the mold closing operation of the lower mold unit 21 and the upper mold unit 22. Therefore, the number of steps of the molding operation is decreased by one step and operation efficiency is improved.
(2) In the above embodiment, the cavity 75 is maintained in a sealed state by the first seal ring 611 in a state that the upper mold-holding member 51 of the upper mold unit 22 is moved and stopped in adjacent to the upper surface of the lower mold-holding member 36. The second seal ring 612 is arranged between the sliding surfaces of the injection rod 40 and the guide member 43 and the molten metal 45 in the bottom of the storing chamber 42 and the corresponding second space 67 are maintained in a sealed state by the second seal ring 612. In this state, the pressure in the first space 63 and the second space 67 is decreased by the pressure-decreasing pump 64 into almost a vacuum state that is not achieved by the die-cast of a prior art. Therefore, the pressure in the cavity 75 is negative and almost vacuum to remove the air in the cavity 75. Accordingly, air bubbles are not mixed with the molten metal 45, and fine mold cavities are not generated in the products by mixed air bubbles. The quality of the products is improved. The degree that the molten metal 45 is oxidized by oxygen that is included in the air is extremely small. Therefore, the outer appearance of the products is improved.
(3) In the above embodiment, the cooling mechanism 74 cools the second seal ring 612, which is part of the second pressure-decreasing mechanism 68. Therefore, the second seal ring 612 is prevented from being deteriorated by the molten metal of a high temperature, and the durability of the second seal ring 612 is improved.
(4) In the above embodiment, the lower mold-holding member 36 of the lower mold unit 21 is maintained in a tilted position by the tilt mechanism 27 when the molding device is in an open state as shown in Fig. 3. Therefore, the molten metal 45 is easily injected into the storing chamber 42, the bubbles are not generated in the molten metal 45, and air bubbles are prevented from being mixed with the molten metal.

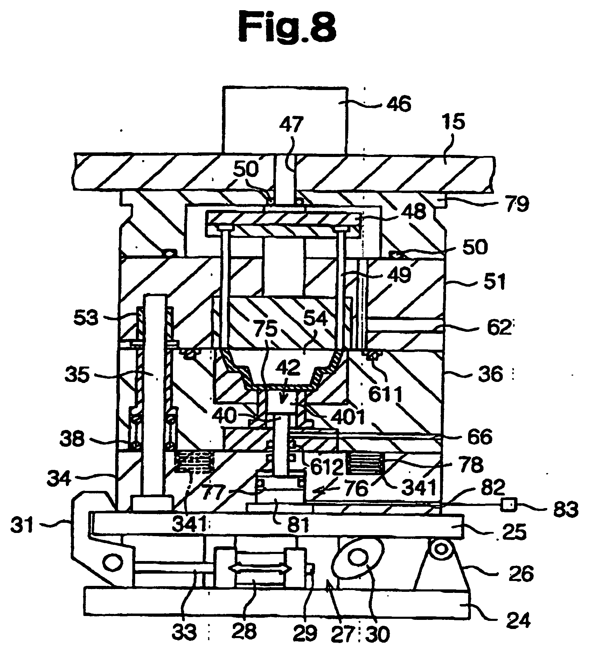

Next, a second embodiment of the present invention will be explained with reference to Fig. 8. In the following embodiment, the same numerals are applied to the parts that have same functions as the above embodiment and the explanation thereof is omitted.

In this embodiment, the seats 34 in the above embodiment are integrally formed. A cylinder 76 is formed at the center of the seat 34 and the injection rod 40 is connected to a piston 77 of the cylinder 76. A large diameter portion 401 is arranged at the upper end of the injection rod 40. A plurality of spring accommodation chambers 341 is formed in the upper surface of the seat 34 and coned disc springs 78 are accommodated therein.

A cover 79 is connected on the upper surface of the upper mold-holding member 51 and fixed to the upper mold-holding member 51 by bolts (not shown). A support plate 48 is accommodated in the cover 79 and a product pushing out pin 49 is connected to the support plate 48. The product pushing out pin 49 penetrates through the upper mold-holding member 51 and the upper mold 54 to enter the cavity 75. A cylinder 46 is fixed on the upper surface of the lift plate 15 upwardly and a piston rod 47 is penetrated through the cover 79 and connected to the support plate 48.

A seal ring 50 is arranged between the connection surfaces of the upper mold-holding member 51 and the cover 79. A seal ring 50 is arranged between the outer circumferential surface of the piston rod 47 and the cover 79. A first pressure-decreasing passage 62 that is arranged in the upper mold-holding member 51 is communicated with a chamber 79 that accommodates the support plate 48.

A passage 82 that is arranged in the seat 34 is communicated with a pressure chamber 81 that is formed at the lower side of the piston 77. A relief valve 83 is arranged in the passage 82. A fluid such as oil is supplied to the pressure chamber 81 from a fluid supply device (not shown) and the pressure in the pressure chamber 81 is maintained at a predetermined pressure. In this embodiment, a position adjustment mechanism comprises the cylinder 76, the passage 82, the relief valve 83, and other components. The position adjustment mechanism adjusts the height position of the injection rod 40 in accordance with the amount of the material to be molded in the storing chamber 42.

In this embodiment, the cylinder 76 and the relief valve 83 function to compensate for fluctuations in the stored amount of the molten metal 45 in the storing chamber 42. For example, if there is an excessive amount of the molten metal 45 in the storing chamber 42, the injection rod 40 is pressed downward by the molten metal 45 when the mold unit is closed as shown in Fig. 8. Accordingly, the piston 77 presses the fluid in the pressure chamber 81. Then, to maintain the pressure in the pressure chamber 81, the fluid in the pressure chamber 81 is conducted out through the relief valve 83. As a result, the injection rod 40 is permitted to move downward, and the excessive amount of molten metal, which cannot flow into the cavity 75, remains in the storing chamber 42.

The coned disc spring 78 prevents the connection surfaces of the lower mold-holding member 36 and the upper mold-holding member 51 from being open when the lower mold-holding member 36 and the upper mold-holding member 51 are closed. A cylinder may be used for the coned disc spring 78.

This embodiment may be modified as follows.

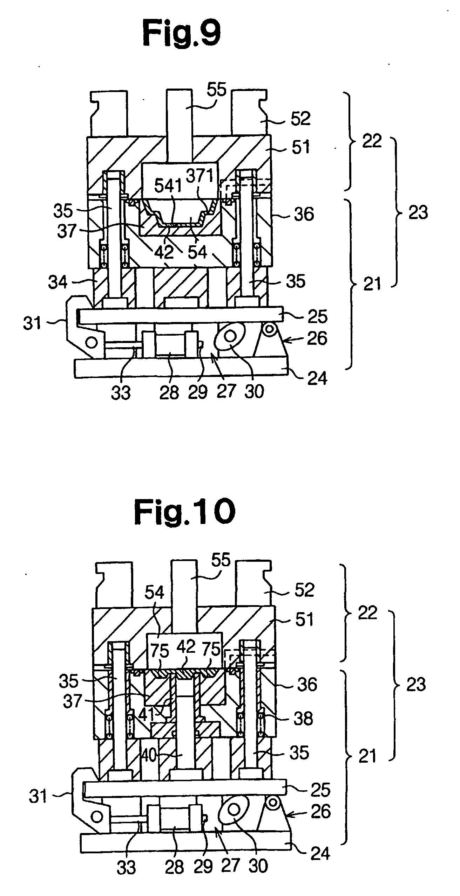

As shown in Fig. 9, the storing chamber 42 may be arranged in the first molding surface 371 of the lower mold 37. The molten metal stored in the storing chamber 42 may be directly pressured by the second molding surface 541 of the upper mold 54 to mold a product. In this embodiment, a recess portion of the first molding surface 371 functions as the storing chamber 42 and the second molding surface 541 of the upper mold 54 functions as the injection rod 40.

As shown in Fig. 10, a plurality of cavities 75 may be arranged in the lower mold 37 to mold a plurality of products.

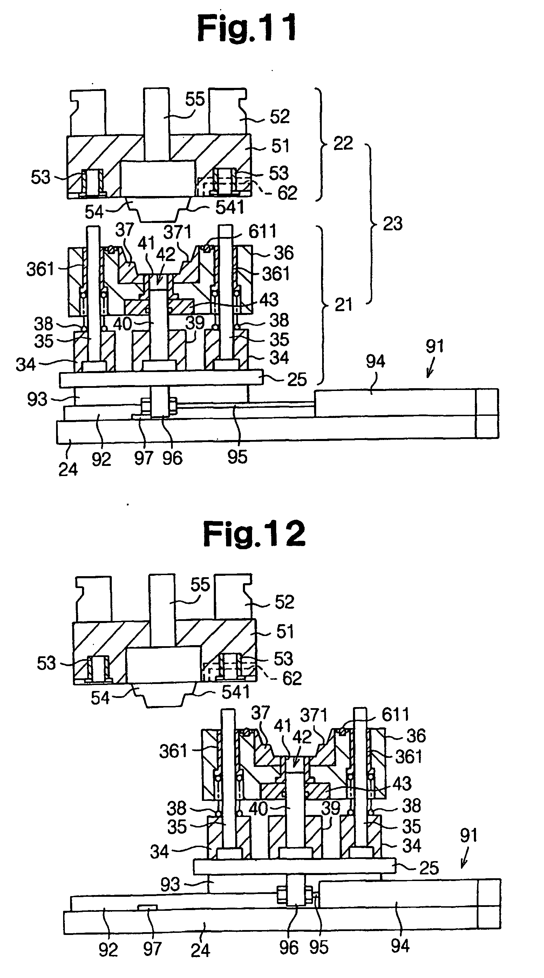

As shown in Figs. 11 and 12, a position switching mechanism 91 may be arranged for the tilt mechanism 27. The position switching mechanism 91 switches the position of the lower mold-holding member 36 by reciprocating the horizontal support plate 25 in a horizontal direction. A pair of guide rails 92 is arranged on the upper surface of the base plate 24 so as to be parallel to each other with a predetermined distance. A pair of guided members 93 that is fixed to the lower surface of the horizontal support plate 25 is supported above guide rails 92 so as to be reciprocated in the horizontal direction. A cylinder 94 is fixed horizontally on the upper surface of the base plate 24, and the distal end of a rod 95 of the cylinder 94 is connected to a bracket 96 that is arranged on the lower surface of the horizontal support plate 25. A position restriction member 97 is arranged on the upper surface of the base plate 24 corresponding to the bracket 96 so as to be adjusted horizontally by the position adjustment mechanism (not shown). The position of the bracket 96 is restricted by the position restriction member 97 and the lower holding member 36 is maintained at the position corresponding to the upper mold-holding member 51. As is not shown in Figs. 11-16, the first pressure-decreasing mechanism 65, the second pressure decreasing mechanism 68, and the cooling mechanism 74 are provided in the modifications.

In this modification, the rod 95 of the cylinder 94 is moved rearward from the separated state, as shown in Fig. 11 and the lower mold-holding member 36 of the lower mold unit 21 is moved to the right side stand-by position as shown in Fig. 12. In this state, the molten metal is supplied into the storing chamber 42 from a supply device (not shown). When the supply of the molten metal is completed, the rod 95 of the cylinder 94 is moved forward so as to move the horizontal support plate 25 forward to the mold matching position, as shown in Fig. 11, and the upper mold unit 22 is lowered to the lower mold unit 21. The subsequent molding operation is same as that of the embodiment shown in Fig. 1.

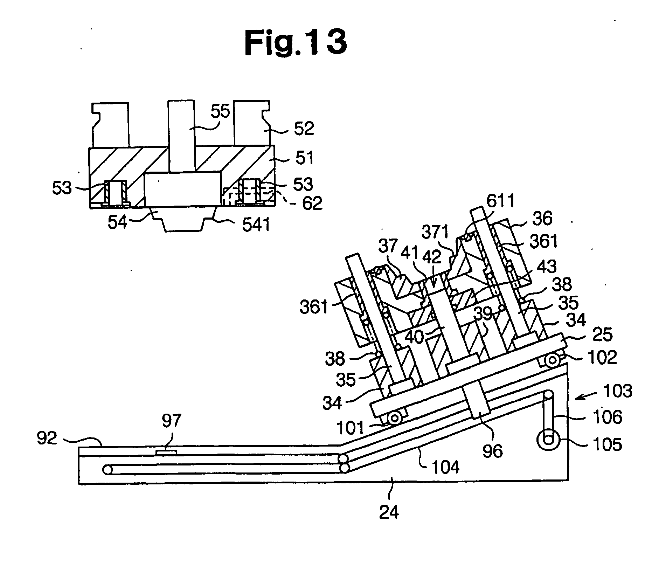

As shown in Fig. 13, a pair of bent guide rails 92 may be arranged on the base plate 24 and rollers 101, 102 that are guided by the guide rails 92 may be arranged on the lower surface of the horizontal support plate 25. A chain 104 of a chain drive mechanism 103 may be engaged to the bracket 96 and the chain 104 may be rotated by a motor 105 and a chain 106 to switch the position of the horizontal support plate 25.

In this modification, the lower mold-holding member 36 and the storing chamber 42 are maintained in the stand-by position in a state that they are tilted. Therefore, the molten metal is injected into the storing chamber 42 in a state that the storing chamber 42 is tilted, the mixture of the air bubbles into the molten metal is decreased, and the molten metal is injected properly.

In this modification, when the molten metal is injected into the storing chamber 42 with moving the lower mold-holding member 36 into a slanted lower direction, the injection operation is carried out while the tilted angle of the storing chamber 42 is decreasing. Therefore, the molten metal is injected more properly and efficiently, with the air bubbles being prevented from mixing with the molten metal.

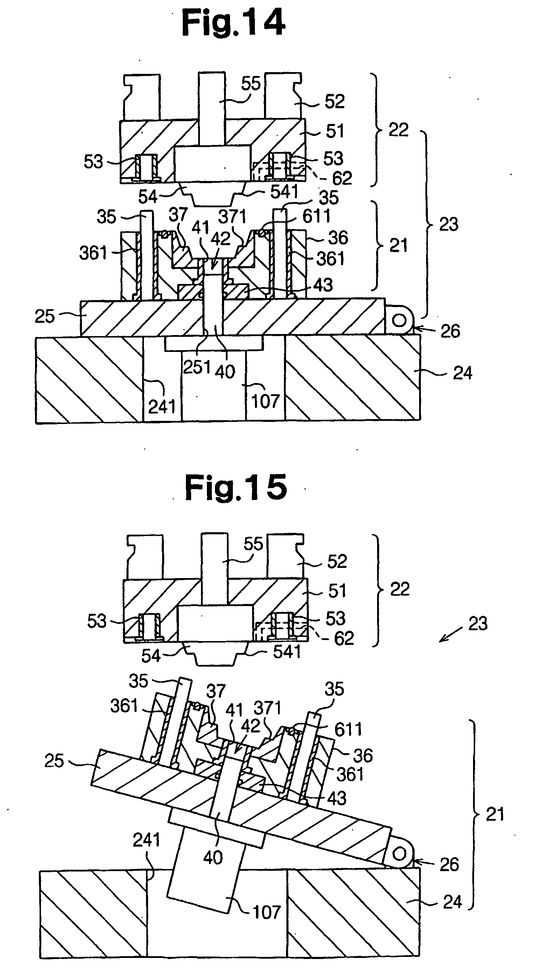

In a modification shown in Fig. 14, the horizontal support plate 25 is arranged on the right end of the upper surface of the base plate 24 via a hinge mechanism 26 so as to be tilted. An accommodation hole 241 of a large diameter is formed at the center of the base plate 24. A fluid pressure cylinder 107 is arranged upwardly on the lower surface of the horizontal support plate 25. A piston rod of the fluid pressure cylinder 107 is integrally formed with the injection rod 40 and is inserted loosely in a penetration aperture 251 that is formed in the horizontal support plate 25.

In this modification, when a tilt cylinder (not shown) that is arranged between the base plate 24 and the horizontal support plate 25 is operated in a state that the upper mold unit 22 is moved upwardly as shown in Fig. 15, the horizontal support plate 25 is tilted around the hinge mechanism 26 in the clockwise direction in Fig. 15. At this time, the fluid pressure cylinder 107 is lifted in the slanted upper direction with the horizontal support plate 25 and the molten metal is injected into the storing chamber 42.

After the injection of the molten metal, the tilt cylinder (not shown) is operated to return the horizontal support plate 25 into a state shown in Fig. 14 and the upper mold unit 22 is moved downwardly to the lower mold unit 21 for mold matching. In this state, after the pressure in the cavity 75 is decreased by the first and second pressure-decreasing mechanisms (not shown), the fluid pressure cylinder 107 is operated to inject the molten metal accommodated in the storing chamber 42 into the cavity 75.

In this modification, the molding operation of products is carried out efficiently because only one mold matching operation is carried out.

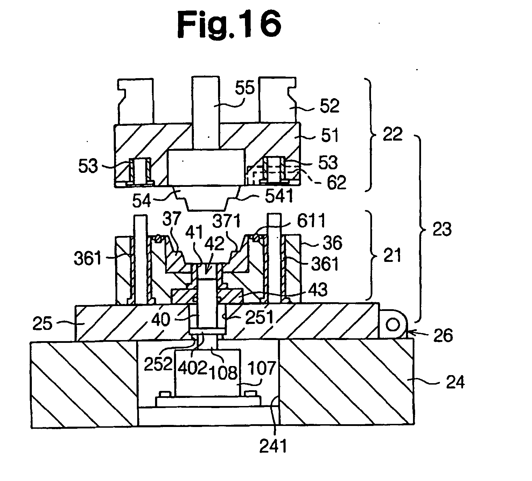

The modification shown in Fig. 16 is a modified example of the modification shown in Fig. 14. The fluid pressure cylinder 107 is fixed to the bottom of the accommodation hole 241 of the base plate 24. A flange 402 is integrally formed with the lower end of the injection rod 40. The flange 402 is supported by a step 252 that is arranged at the bottom of the penetration aperture 251 of the horizontal support plate 25 so as not to be movable downwardly. Moreover, the lower end surface of the injection rod 40 is pressed upward by the upper end surface of the piston rod 108 of the fluid pressure cylinder 107.

In this modification, because the piston rod 108 of the fluid pressure cylinder 107 is separated from the injection rod 40, it is not necessary to lift the fluid pressure cylinder 107 when the horizontal support plate 25 is tilted. Other structure and operation are the same as that of the modification shown in Fig. 14.

In the embodiment shown in Fig. 8, the cylinder 76 may function as a pushing up cylinder.

In the above embodiment, the molten metal is used to manufacture a product, however, semi-coagulant may be used as a material to be molded to mold a product. For example, a material to be molded of a metal such as solid aluminum that is heated to 200-300 °C is stored in the storing chamber 42 so that hot molding may be carried out.

A hydraulic cylinder may be used as the lift maintaining mechanism of the lower mold-holding member 36 instead of the coil spring 38. In this case, the hydraulic cylinder lifts and maintains the lower mold-holding member 36 at a predetermined height position at the pressure decreased vacuum state against the high pressure power for compressing the solid during the hot molding of the solid.

As is not shown, the first seal ring 611 may be arranged in a circular groove that is formed on the lower surface of the upper mold-holding member 51. The second seal ring 612 may be arranged in a circular groove that is formed on the outer circumferential surface of the injection rod 40.

The hinge mechanism 26 and the tilt mechanism 27 may be omitted.

An actuator such as a cylinder for pushing out a product may be arranged below the base plate 24.

The first pressure-decreasing passage 62 may be formed on the lower mold-holding member 36 side.

In each embodiment, the lower mold unit 21 may be moved to the stand-by position that is frontward or rearward from the mold matching position.

In each embodiment shown in Figs. 1-7, 8, 9, and 10, the horizontal support plate 25 may be arranged in a predetermined position so as not be movable.

In the modifications shown in Fig. 14 or 16, the fluid pressure cylinder 107 may function as a cylinder for pushing out a product.

In the embodiments shown in Figs. 1-7, the lock lever 31 may be released automatically by the piston rod 33.

In the embodiment shown in Fig. 8, the lower surface of the piston 77 may be urged upwardly by a spring and the passage 82 and the relief valve 83 may be omitted.

Therefore, the present examples and embodiments are to be considered as illustrative and not restrictive and the invention is not to be limited to the details given herein, but may be modified within the scope and equivalence of the appended claims.

## Claims

1. A molding device comprising:
a lower mold unit (21);
an upper mold unit (22) arranged: above the lower mold unit (21) to face the lower mold unit (21), wherein the lower mold unit (21) and the upper: mold unit (22) are moveable relative to one another so as to allow: them to approach and be separated from each other, and wherein, when the lower mold unit (21) and the upper mold unit (22) approach each other to be closed, a molding cavity (75) is defined between the lower mold unit (21) and the upper mold unit (22);
a storing chamber (42) for storing molten material, the storing chamber (42) arranged in the lower mold unit (21), wherein the storing chamber (42) is communicable with the molding cavity (75); and
a pushing mechanism (40) arranged in the lower mold unit (21) for pushing the molten material out of the storing chamber (42) to the molding cavity (75) when the molding cavity (75) is defined between the lower mold unit (21) and the upper mold unit (22), the molding device being **characterized in that**:
the lower mold unit :(21) includes: a movable member (36, 37) that defines a part of the molding cavity (75) and the storing chamber (42), wherein the pushing mechanism includes a pushing rod (40) that is insertable into the storing chamber (42), the pushing rod (40) having an end surface that forms a bottom of the storing chamber (42), and wherein the pushing rod (40) is for pushing the molten material out of the storing chamber (42) to the molding cavity .(75) when the movable member (36, 37) moves together with the upper mold unit (22) with respect to the pushing rod (40).

2. A molding device according to claim 1 **characterized by** a pressure-decreasing mechanism (65) for decreasing pressure in the molding cavity (75) prior to pushing the molten material out of :the storing chamber (42) to the molding cavity (75).

3. A molding device according to claim 2 **characterized in that** each of the lower mold unit (21) and the upper mold unit (22) has a facing surface, the facing surfaces facing each other; and
the pressure-decreasing mechanism (65) including a first seal member :(611) arranged between the facing surfaces and a first pressure-decreasing passage (62) that is open in at least one of the facing surfaces, and when the facing surfaces approach each other such that a predetermined first space (63) is defined between the facing surfaces, the first seal member (611) seals a space between the facing surfaces to surround the molding cavity (75) and a part of the first space (63), and the first pressure-decreasing passage (62) is communicable with the molding cavity (75) via the part of the first space (63) that is surrounded by the first seal member (611).

4. A molding device according to claim 2 or 3 **characterized in that** the pressure-decreasing mechanism is a first pressure-decreasing mechanism (65) and the molding device further comprises a second pressure-decreasing mechanism (68), wherein the second pressure-decreasing mechanism (68) is for decreasing the pressure that acts on a part of the molten material positioned at an opposite side of the molding cavity (75) substantially at the same time that the pressure in the molding cavity (75) is decreased.

5. A molding device according to claim 4 **characterized in that** the lower mold unit (21) has an insertion hole (431) that is communicable with the storing chamber (42) and is for receiving the pushing rod (40), wherein a predetermined second space (67) is defined between an outer circumferential surface of the pushing rod (40) and an:inner circumferential surface of the insertion hole (431), wherein the second pressure-decreasing mechanism (68) includes a second seal member (612) and a second pressure-decreasing passage (66), wherein the second seal member (612) is for sealing a space between the outer circumferential surface of the pushing rod (40) and the inner circumferential surface of the insertion hole (431), and wherein the second pressure-decreasing passage (66) is communicable with a part of the second space (67) between the second seal member :(612) and the storing chamber (42).

6. A molding device according to claim 5 **characterized by** a cooling mechanism (74) for cooling the second seal member (612).

7. A molding device according to claim 1 **characterized in that** the lower mold unit (21) includes a horizontal support plate (25), wherein the movable member includes a lower mold-holding member (36) that is supported on the horizontal support plate (25) to reciprocate in a vertical direction, and a lower mold (37) that: is held by the lower mold-holding member (36), wherein the: lower mold unit (21) further includes a lift-maintaining mechanism (38) for lifting the lower mold-holding member: (36) and maintaining the lower mold-holding member (36) at a predetermined height position from the horizontal support plate (25),
wherein the pushing rod (40) is for pushing the molten material out of the storing chamber (42) to the molding cavity (75) as the lower mold-holding member (36) is pushed down toward the horizontal support plate (25) by the upper mold unit(22).

8. A molding device according to any preceding claim **characterized in that** the lower mold unit (21) includes a position adjustment mechanism (76, 82, 83) for adjusting an axial position of the pushing rod (40) according to the amount of the molten material in the storing chamber (42).

9. A molding device according to any preceding claim **characterized in that** the lower and upper mold units (21, 22) are moveable relatively in a vertical direction and a horizontal direction.

10. A molding device according to any preceding claim **characterized in that** the lower mold unit (21) has a tilt mechanism (27) for tilting the storing chamber (42).

## Patentansprüche

1. Gießvorrichtung, welche folgendes aufweist:
ein unteres Formteil (21);
ein oberes Formteil (22), welches oberhalb des unteres Formteils (21) angeordnet ist und dem unteren Formteil (21) zugewandt liegt, wobei das untere Formteil (21) und das obere Formteil (22) relativ zueinander derart beweglich sind, dass sie sich aufeinander zu und voneinander weg bewegen können, und wobei dann, wenn das untere Formteil (21) und das obere Formteil (22) schließend einander angenähert sind, ein Formhohlraum (75) zwischen dem unteren Formteil (21) und dem oberen Formteil (22) gebildet wird;
eine Speicherkammer (42) zum Speichern von schmelzflüssigem Material, wobei die Speicherkammer (42) in dem unteren Formteil (21) angeordnet ist, und wobei die Speicherkammer (42) in kommunizierender Verbindung mit dem Formhohlraum (75) bringbar ist; und
eine Drückeinrichtung (40), welche in dem unteren Formteil (21) angeordnet ist, um das schmelzflüssige Material aus dem Vorratsraum (42) in den Formhohlraum (75) zu drücken, wenn der Formhohlraum (75) zwischen dem unteren Formteil (21) und dem oberen Formteil (22) gebildet ist, **dadurch gekennzeichnet, dass** die Gießvorrichtung folgendes aufweist:
das untere Formteil (21) umfasst ein bewegliches Teil (36, 37), welches einen Teil des Formhohlraums (75) in der Speicherkammer (42) begrenzt, wobei die Drückeinrichtung eine Schubstange (40) umfasst, die in die Speicherkammer (42) einführbar ist, wobei die Schubstange (40) eine Innenfläche hat, welche einen Boden der Speicherkammer (42) bildet und wobei die Schubstange (40) vorgesehen ist, um das schmelzflüssige Material aus der Speicherkammer (42) in den Formhohlraum (75) zu drücken, wenn das bewegliche Teil (36, 37) sich zusammen mit dem oberen Formteil (22) bezüglich der Schubstange (40) bewegt.

2. Gießvorrichtung nach Anspruch 1, **gekennzeichnet durch** eine Druckmindereinrichtung (65) zum Herabsetzen des Drucks in dem Formhohlraum (75), bevor das schmelzflüssige Material aus der Speicherkammer (42) in den Formhohlraum (75) gedrückt wird.

3. Gießvorrichtung nach Anspruch 2, **dadurch gekennzeichnet, dass** jeweils das untere Formteil (21) und das obere Formteil (22) eine Stirnfläche haben, wobei die Stirnflächen einander zugewandt liegen, und
die Drückmindereinrichtung (65) ein erster Dichtungsteil (611) umfasst, welches zwischen den Stirnflächen und einem ersten Druckminderdurchgang (62) angeordnet ist, welcher sich an wenigstens einer der Stirnflächen öffnet, und das dann, wenn die Stirnflächen sich derart aufeinander zu bewegen, dass ein vorbestimmter erster Zwischenraum (63) zwischen den Stirnflächen gebildet wird, das erste Dichtungsteil (611) einen Raum zwischen den Stirnflächen abdichtet, um den Formhohlraum (75) und einen Teil des ersten Zwischenraums (63) zu umschließen, und dass der erste Druckminderdurchgang (62) in kommunizierender Verbindung mit dem Formhohlraum (75) über einen Teil des ersten Raumes (63) bringbar ist, welcher von dem ersten Dichtungsteil (611) umgeben ist.

4. Gießvorrichtung nach Anspruch 2 oder 3, **dadurch gekennzeichnet, dass** die Druckmindereinrichtung von einer ersten Druckmindoreinrichtung (65) gebildet wird, und dass die Gießvorrichtung ferner eine zweiter Druckmindereinrichtung (68) aufweist, wobei die zweite Druckmindereinrichtung (68) dazu dient, den Druck herabzusetzen, welcher auf einen Teil des schmelzflüssigen Materials einwirkt, welches sich: auf einer gegenüberliegenden Seite des Formhohlraums (75) im Wesentlichen zur gleichen Zeit befindet, wenn der Druck in dem Formhohlraum herabgesetzt wird.

5. Gießvorrichtung nach Anspruch 4, **dadurch gekennzeichnet, dass** das untere Formteil (21) eine Einführungsöffnung (431) hat, welche in kommunizierender Verbindung mit der Speicherkammer (42) bringbar ist und dazu dient, die Schubstange (40) aufzunehmen, dass ein vorbestimmter zweiter Raum (67) zwischen einer äußeren Umfangsfläche der Schubstange (40) und einer inneren Umfangsfläche der Einführungsöffnung (431) gebildet wird, dass die zweite Druckmindereinrichtung (68) ein zweites Dichtungselement (612) und einen zweiten Druckminderdurchgang (66) umfasst, das zweite Dichtungselement (612) dazu bestimmt ist, einen Raum zwischen der äußeren Umfangsfläche der Schubstange (40) und der inneren Umfangsfläche der Einführungsöffnung (431) dicht abzuschließen und dass der zweite Druckminderdurchgang (66) in kommunizierender Verbindung mit einem Teil des zweiten Raums (67) zwischen dem zweiten Dichtungselement (612) und der Speicherkammer 42 bringbar ist.

6. Gießvorrichtung nach Anspruch 5, **dadurch gekehnzeichnet, dass** eine Kühleinrichtung (74) zum Kühlen des zweiten Dichtungselements (612) vorgesehen ist.

7. Gießvorrichtung nach Anspruch 1, **dadurch gekennzeichnet, dass** das untere Formteil (21) eine horizontale Tragplatte (25) umfasst, das bewegliche Teil ein unteres Formhalteteil (36) umfasst, welches auf der horizontalen Tragplatte (25) abgestützt ist, um in einer vertikalen Richtung eine hin- und hergehende Bewegung auszuführen, ein unteres Formteil (37) weiches durch das untere Formhalteteil (36) gehalten ist, das untere Formteil (21) ferner eine Hubhalteeinrichtung (38) umfasst, um das untere Formhalteiteil (36) anzuheben und das untere Formhalteteil (36) in einer vorbestimmten Höhenposition ausgehend von der horizontalen Tragplatte (25) zu halten,
wobei die Schubstange (40) dazu bestimmt ist, das schmelzflüssige Material aus der Speicherkammer (42) in den Formhohlraum (75) zu drücken, wenn das untere Formhalteteil (36) in Richtung nach unten auf die horizontale Tragplatte (25) mittels des oberen Formteils (22) gedrückt wird.

8. Gießvorrichtung nach einem der vorangehenden Ansprüche, **dadurch gekennzeichnet, dass** das untere Formteil (21) eine Positionseinstelleinrichtung (76, 82, 83) zum Einstellen einer axialen Position der Schubstange (40) nach; Maßgabe der Menge an schmelzflüssigem Material in der Speicherkammer (42) umfasst.

9. Gießvorrichtung nach einem der vorangehenden Ansprüche, **dadurch gekennzeichnet, dass** die unteren und oberen Formteile (21, 22) relativ in eine vertikale Richtung und eine horizontale Richtung bewegbar sind.

10. Gießvorrichtung nach einem der vorangehenden Ansprüche, **dadurch gekennzeichnet, dass** das untere Formteil (21) eine Kippeinrichtung (27) zum Kippen der Speicherkammer (42) hat.

## Revendications

1. Dispositif de moulage comprenant :
- une unité de moule inférieure (21) ;
- une unité de moule supérieure (22) disposée au-dessus de l'unité de moule inférieure (21) pour faire face à l'unité de moule inférieure (21), où l'unité de moule inférieure (21) et l'unité de moule supérieure (22) sont déplaçables l'une par-rapport à l'autre de façon à leur permettre de s'approcher et d'être séparées l'une de l'autre, et où, lorsque l'unité de moule inférieure (21) et l'unité de moule supérieure (22) s'approchent l'une de l'autre pour être fermées, une cavité de moulage (75) est définie entre l'unité de moule inférieure (21) et l'unité de moule supérieure (22) ;
- une chambre de stockage (42) pour stocker de la matière fondue, la chambre de stockage (42) étant disposée dans l'unité de moule inférieure (21), la chambre de stockage (42) étant apte à communiquer avec la cavité de moulage (75) ; et
- un mécanisme de poussée (40) disposé dans l'unité de moule inférieure (21) pour pousser la matière fondue hors de la chambre de stockage (42) dans la cavité de moulage (75) lorsque la cavité de moulage (75) est définie entre l'unité de moule inférieure (21) et l'unité de moule supérieure (22),
le dispositif de moulage étant **caractérisé par le fait que** :
- l'unité de moule inférieure (21) comprend un élément mobile (36, 37) qui définit une partie de la cavité de moulage (75) et la chambre de stockage (42), le mécanisme de poussée comprenant une tige de poussée (40) qui est apte à être introduite dans la chambre de stockage (42), et la tige de poussée (40) ayant une surface d'extrémité qui forme un fond de la chambre de stockage (42), et la tige de poussée (40) étant destinée à pousser la matière fondue hors de la chambre de stockage (42) dans la cavité de moulage (75) lorsque l'élément mobile (36, 37) se déplace conjointement avec l'unité de moule supérieure (22) par rapport à la tige de poussée (40).

2. Dispositif de moulage selon la revendication 1, **caractérisé par** un mécanisme (65) de diminution de pression, pour diminuer la pression dans la cavité de moulage (75) avant de pousser la matière fondue hors de la chambre de stockage (42) dans la cavité de moulage (75).

3. Dispositif de moulage selon la revendication 2, **caractérisé par le fait que** :
- chacune de l'unité de moule inférieure (21) et de l'unité de moule supérieure (22) a une surface frontale, les surfaces frontales étant tournées l'une vers l'autre ; et
- le mécanisme (65) de diminution de pression comprenant un premier élément de scellement étanche (611) disposé entre les surfaces frontales et un premier passage (62) de diminution de pression qui est ouvert dans au moins l'une des surfaces frontales, et lorsque les surfaces frontales s'approchent l'une de l'autre de telle sorte qu'un premier espace prédéterminé (63) est défini entre les surfaces frontales, le premier élément de scellement étanche (611) scelle un espace entre les surface frontales pour entourer la cavité de moulage (75) et une partie du premier espace (63), et le premier passage (62) de diminution de pression est apte à communiquer avec la cavité de moulage (75) par l'intermédiaire de la partie du premier espace (63) qui est entourée par le premier élément de scellement étanche (611).

4. Dispositif de moulage selon l'une des revendications 2 ou 3, **caractérisé par le fait que** le mécanisme de diminution de pression est un premier mécanisme (65) de diminution de pression et le dispositif de moulage comprend en outre un second mécanisme (68) de diminution de pression, le second mécanisme (68) de diminution de pression étant destiné à diminuer la pression qui agit sur une partie de la matière fondue positionnée au niveau d'un côté opposé de la cavité de moulage (75) sensiblement en même temps que la pression dans la cavité de moulage (75) est diminuée.

5. Dispositif de moulage selon la revendication 4, **caractérisé par le fait que** l'unité de moule inférieure (21) a un trou d'introduction (431) qui est apte à communiquer avec la chambre de stockage (42) et est destiné à recevoir la tige de poussée (40), un second espace prédéterminé (67) étant défini entre une surface périphérique externe de la tige de poussée (40) et une surface périphérique interne du trou d'introduction (431), le second mécanisme (68) de diminution de pression comprenant un second élément de scellement étanche (612) et un second passage (66) de diminution de pression, le second élément de scellement étanche (612) étant destiné à sceller un espace entre la surface périphérique externe de la tige de poussée (40) et la surface périphérique interne du trou d'introduction (431), et le second passage (66) de diminution de pression étant apte à communiquer avec une partie du second espace (67) entre le second élément de scellement étanche (612) et la chambre de stockage (42).

6. Dispositif de moulage selon la revendication 5, **caractérisé par** un mécanisme de refroidissement (74) pour refroidir le second élément de scellement étanche (612).

7. Dispositif de moulage selon la revendication 1, **caractérisé par le fait que** l'unité de moule inférieure (21) comprend une plaque de support horizontale (25), l'élément mobile comprenant un élément (36) de support de moule inférieur qui est supporté sur la plaque de support horizontale (25) pour se déplacer en va-et-vient dans une direction verticale, et un moule inférieur (37) qui est supporté par l'élément (36) de support de moule inférieur, l'unité de moule inférieure (21) comprenant en outre un mécanisme (38) de maintien du soulèvement pour soulever l'élément (36) de support de moule inférieur et maintenir l'élément (36) de support de moule inférieur à une position en hauteur prédéterminée à partir de la plaque de support horizontale (25),
la tige de poussée (40) étant destinée à pousser la matière fondue hors de la chambre de stockage (42) dans la cavité de moulage (75) alors que l'élément (36) de support de moule inférieur est poussé vers le bas en direction de la plaque de support horizontale (25) par l'unité de moule supérieure (22).

8. Dispositif de moulage selon l'une quelconque des revendications précédentes, **caractérisé par le fait que** l'unité de moule inférieure (21) comprend un mécanisme (76, 82, 83) d'ajustement en position, pour ajuster une position axiale de la tige de poussée (40) selon la quantité de la matière fondue dans la chambre de stockage (42).

9. Dispositif de moulage selon l'une quelconque des revendications précédentes, **caractérisé par le fait que** les unités de moule inférieure et supérieure (21, 22) sont déplaçables relativement dans une direction verticale et une direction horizontale.

10. Dispositif de moulage selon l'une quelconque des revendications précédentes, **caractérisé par le fait que** l'unité de moule inférieure (21) a un mécanisme d'inclinaison (27) pour incliner la chambre de stockage (42).
